(19) Europäisches Patentamt
European Patent Office
Office européen des brevets

(11) EP 3 821 708 A1

(12) EUROPEAN PATENT APPLICATION
published in accordance with Art. 153(4) EPC

(43) Date of publication:
19.05.2021 Bulletin 2021/20

(51) Int Cl.:
A01N 25/10 (2006.01)        A01P 3/00 (2006.01)
A01N 43/828 (2006.01)       A01N 53/12 (2006.01)

(21) Application number: 19833178.7

(22) Date of filing: 09.07.2019

(86) International application number:
PCT/JP2019/027136

(87) International publication number:
WO 2020/013177 (16.01.2020 Gazette 2020/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 11.07.2018 JP 2018131228

(71) Applicant: Sanyo Chemical Industries, Ltd.
Kyoto-shi, Kyoto 605-0995 (JP)

(72) Inventors:
• UEDA, Masumi
  Kyoto-shi, Kyoto 605-0995 (JP)
• TANAKA, Yuya
  Kyoto-shi, Kyoto 605-0995 (JP)
• TOBINAGA, Kyohei
  Kyoto-shi, Kyoto 605-0995 (JP)

(74) Representative: Mewburn Ellis LLP
Aurora Building
Counterslip
Bristol BS1 6BX (GB)

(54) PLANT GROWTH AID AND PLANT GROWING METHOD

(57) Provided are a plant growth aid that enables a leaf to efficiently take in a chemical agent and has excellent elution property of the chemical agent from particles and a method for growing a plant. The present invention relates to a plant growth aid (X) containing particles (P) having a median size of 1 to 300 nm, the particles (P) containing a biodegradable resin (A) and a hydrophobic agent (B) having an octanol/water partition coefficient (Log Pow) at 25°C of 1 to 10; and a method for growing a plant using the same.

EP 3 821 708 A1

**Description**

TECHNICAL FIELD

The present invention relates to plant growth aids. The present invention also relates to methods for growing a plant.

BACKGROUND ART

Fertilizers for agricultural purposes are used for stable crop production. Fertilizers are typically absorbed from roots via soil mixing and thereby promote the growth of plants. Meanwhile, foliar spray has been attracting an attention as a fertilizing method that assists soil incorporation. Foliar spray is expected to achieve prevention of physiological disorder, early recovery from growth defects due to insufficient nutrition, enhancement of the resistance to diseases and pests, and the like. Agricultural chemicals need to penetrate leaves after being applied to the leaves. Thus, penetration of chemical agents into leaves has been studied for a long time. A recent technique discloses use of a nanoparticle formulation having a relatively high dissolution rate and dissolution degree in a solvent, which achieves a reduction in proportion of active ingredients to be used (e.g., Patent Literature 1).

CITATION LIST

- Patent Literature

Patent Literature 1: JP 2001-501959 T

SUMMARY OF INVENTION

- Technical Problem

In the technique disclosed in Patent Literature 1, unfortunately, the plant insufficiently takes in (absorbs) particles and chemical agents are insufficiently eluted from the particles, which lead to insufficient growth of a plant.
The present invention aims to provide a plant growth aid that enables a leaf to efficiently take in a chemical agent and has excellent elution property of the chemical agent from particles.

- Solution to Problem

The inventors made studies in order to achieve the aim and thereby completed the present invention. Specifically, the present invention relates to a plant growth aid (X) containing particles (P) having a median size of 1 to 300 nm, the particles (P) containing a biodegradable resin (A) and a hydrophobic agent (B) having an octanol/water partition coefficient (Log Pow) at 25°C of 1 to 10; and a method for growing a plant using the plant growth aid (X).

- Advantageous Effects of Invention

The plant growth aid (X) of the present invention achieves the following effects.

(1) Leaves can efficiently take in a chemical agent.
(2) The chemical agent has appropriate elution property from particles, excellent sustained-release property, and excellent sustainability of efficacy.
(3) Owing to the above (1) and (2), even a small amount usage can promote the growth of a plant and the like, which means an excellent effect for growth of a plant.

DESCRIPTION OF EMBODIMENTS

The plant growth aid (X) of the present invention contains particles (P) having a median size of 1 to 300 nm, the particles (P) containing a biodegradable resin (A) and a hydrophobic agent (B) having an octanol/water partition coefficient (Log Pow) at 25°C of 1 to 10. Hereinafter, a hydrophobic agent (B) having an octanol/water partition coefficient (Log Pow) at 25°C of 1 to 10 is also simply referred to as a hydrophobic agent (B).

<Biodegradable resin (A)>

The biodegradable resin (A) in the present invention may be any resin as long as it is biodegradable, that is, any resin which is degradable by microorganisms or enzymes or which can be eaten by creatures. Preferred is a resin satisfying easy degradability in accordance with the test method of OECD301C for biodegradability evaluation. One kind of the biodegradable resin (A) may be used alone or two or more kinds thereof may be used in combination. In terms of easy hydrolysis and a good balance between the elution property of the hydrophobic agent (B) from the particles (P) and the sustained-release property thereof, preferred is at least one resin selected from the group consisting of polylactic acid, polycaprolactone, polyglycolide, a lactic acid-glycolic acid copolymer, and a resin that contains a segment containing one of these resins (a segment containing polylactic acid, polycaprolactone, polyglycolide, or a lactic acid-glycolic acid copolymer) and a segment containing a resin having an SP value of 5 to 15. In an embodiment, the biodegradable resin (A) more preferably includes at least one selected from the group consisting of polylactic acid and a resin that contains a segment containing polylactic acid, polycaprolactone, polyglycolide, or a lactic acid-glycolic acid copolymer and a segment containing a resin having an SP value of 5 to 15, still more preferably a resin that contains polylactic acid and/or a segment containing polylactic acid and a segment containing a resin having an SP value of 5 to 15.

The segment containing a resin having an SP value of 5 to 15 is preferably a segment containing an ethylene oxide (hereinafter, abbreviated as EO) homopolymer, an EO-propylene oxide (hereinafter, abbreviated as PO) copolymer (hereinafter, referred to as an EO-PO copolymer), or a polymer of an ionic monomer.

Each of the polylactic acid, polycaprolactone, polyglycolide, and lactic acid-glycolic acid copolymer has a weight average molecular weight (hereinafter, abbreviated as Mw) of preferably 1,000 to 200,000, more preferably 20,000 to 80,000, still more preferably 20,000 to 60,000. Not less than 1,000 of Mw increases the inclusion rate of the hydrophobic agent (B), leading to good sustained-release property. Not more than 200,000 of Mw achieves good elution property of the hydrophobic agent (B) from the particles (P).

The Mw in the present invention may be determined by gel permeation chromatography under the following conditions, for example.

Apparatus: "HLC-8120GPC" (available from Tosoh Corporation)
Column: "Guardcolumn $H_{XL}$-H" (one column), "TSKgel GMH$_{XL}$" (two columns) (both available from Tosoh Corporation)
Sample solution: 0.25 wt% tetrahydrofuran solution
Amount of solution injected: 100 μL
Flow rate: 1 mL/min
Determination temperature: 40°C
Detection device: refractive index detector
Reference material: standard polystyrene

The polylactic acid, polycaprolactone, polyglycolide, and lactic acid-glycolic acid copolymer may each be a commercially available product or may be produced by a known method. An example of the production method is a method including ring-opening polymerization of a corresponding cyclic monomer with a catalyst.

The biodegradable resin (A) is preferably a resin that contains a segment containing polylactic acid, polycaprolactone, polyglycolide, or a lactic acid-glycolic acid copolymer and a segment containing a resin having an SP value of 5 to 15. The segment containing a resin having an SP value of 5 to 15 is preferably a segment that contains an EO homopolymer (polyethylene glycol), an EO-PO copolymer, or a polymer of an ionic monomer. An example of such a resin is a resin in which an EO homopolymer, an EO-PO copolymer, or a polymer of an ionic monomer binds to a terminal functional group of polylactic acid, polycaprolactone, polyglycolide, or a lactic acid-glycolic acid copolymer. A preferred range of the Mw of the polylactic acid, polycaprolactone, polyglycolide, or lactic acid-glycolic acid copolymer constituting the segment is as described above.

The SP value in the present invention is calculated by a method disclosed in a document written by Robert F Fedors (Polymer Engineering and Science, February, 1974, Vol. 14, No. 2, P. 147 to 154).

Examples of the ionic monomer for the polymer of an ionic monomer include a salt of an inorganic acid (e.g., hydrochloric acid, sulfuric acid, and phosphoric acid) or an organic acid (e.g., acetic acid), such as dimethylaminoethyl (meth)acrylate, diethylaminoethyl (meth)acrylate, and allyl amine; and an alkali metal salt and an ammonium salt of an unsaturated carboxylic acid (e.g., (meth)acrylic acid, crotonic acid, maleic acid, and itaconic acid) or an unsaturated-double-bond-containing organic sulfonic acid (e.g., vinyl sulfonic acid, styrene sulfonic acid, and 2-(meth)acrylamide-2-methyl propane sulfonic acid). The "(meth)acrylate" herein means an acrylate or a methacrylate, and the "(meth)acryl" herein means acryl or methacryl.

The resin that contains a segment containing polylactic acid, polycaprolactone, polyglycolide, or a lactic acid-glycolic acid copolymer and a segment containing a resin having an SP value of 5 to 15 may be produced by any method.

When using an EO homopolymer or an EO-PO copolymer, the resin containing the two segments can be obtained by reacting a carboxyl group of polylactic acid, polycaprolactone, polyglycolide, or a lactic acid-glycolic acid copolymer (when containing a hydroxyl group only, after transforming it into a carboxyl group with a substance such as an acid anhydride) with a hydroxyl group of an EO homopolymer or an EO-PO copolymer.

When using an ionic monomer, the resin containing the two segments can be obtained by, for example, reacting a hydroxyl group of polylactic acid, polycaprolactone, polyglycolide, or a lactic acid-glycolic acid copolymer with an unsaturated carboxylic acid anhydride to introduce an unsaturated double bond, and polymerizing the resulting product with an ionic monomer.

Among an EO homopolymer, an EO-PO copolymer, and a polymer of an ionic monomer, preferred are an EO homopolymer and an EO-PO copolymer in terms of the balance between the elution property of the hydrophobic agent (B) from the particles (P) and the sustained-release property thereof.

When the elution rate of the hydrophobic agent (B) should be increased, the weight proportion of EO in an EO-PO copolymer is preferably 50 to 90 wt%, more preferably 65 to 85 wt%. When the elution rate should be reduced, the weight proportion of EO in an EO-PO copolymer is preferably 2 wt% or more and less than 50 wt%, more preferably 5 to 45 wt%.

The EO homopolymer and the EO-PO copolymer have a number average molecular weight (hereinafter, abbreviated as Mn) of preferably 1,000 to 80,000, more preferably 8,000 to 80,000, still more preferably 9,000 to 75,000. Not less than 1,000 of Mn achieves good elution property of the hydrophobic agent (B), while not more than 80,000 of Mn achieves good sustained-release property of the hydrophobic agent (B).

The Mn in the present invention may be determined by gel permeation chromatography under the following conditions, for example.

Apparatus: "Waters Alliance 2695" (available from Waters Corporation)
Column: "Guardcolumn Super H-L" (one column), "a column in which one TSKgel SuperH2000, one TSKgel SuperH3000, and one TSKgel SuperH4000 (all available from Tosoh Corporation) are connected"
Sample solution: 0.25 wt% tetrahydrofuran solution
Amount of solution injected: 10 $\mu$L
Flow rate: 0.6 mL/min
Determination temperature: 40°C
Detection device: refractive index detector
Reference material: standard polyethylene glycol

In the resin that contains a segment containing polylactic acid, polycaprolactone, polyglycolide, or a lactic acid-glycolic acid copolymer and a segment containing an EO homopolymer, an EO-PO copolymer, or a polymer of an ionic monomer, the proportion of the segment containing polylactic acid, polycaprolactone, polyglycolide, or a lactic acid-glycolic acid copolymer to the resin is preferably 30 to 80 wt%, more preferably 40 to 80 wt%, still more preferably 50 to 80 wt%. Not less than 30 wt% of the segment containing polylactic acid, polycaprolactone, polyglycolide, or a lactic acid-glycolic acid copolymer increases the inclusion rate of the hydrophobic agent (B), leading to good sustained-release property, while not more than 80 wt% thereof achieves good elution property of the hydrophobic agent (B) from the particles (P).

The amount of the biodegradable resin (A) in the particles (P) is preferably 20 to 95 wt%, more preferably 20 to 80 wt%, still more preferably 30 to 70 wt% in terms of elution control of the chemical agent. In an embodiment, when the biodegradable resin (A) in the particles (P) includes at least one resin selected from the group consisting of polylactic acid, polycaprolactone, polyglycolide, a lactic acid-glycolic acid copolymer, and a resin that contains a segment containing one of these resins and a segment containing a resin having an SP value of 5 to 15, the total amount of the polylactic acid, polycaprolactone, polyglycolide, lactic acid-glycolic acid copolymer, and segment containing one of these resins in the particles (P) is preferably 20 to 80 wt%, more preferably 30 to 70 wt%.

<Hydrophobic agent (B)>

The term "hydrophobic" of the hydrophobic agent (B) in the present invention indicates that the agent has an octanol/water partition coefficient (Log Pow) at 25°C of higher than 0. The octanol/water partition coefficient (Log Pow) can be determined in accordance with a method for determining the partition coefficient (1-octanol/water) of a chemical agent specified in Yakuhatsu Notification No. 291, issued by kikyoku 62, No. 171, OECD Test Guideline ("C(81)30 final attachment 1") 107.

The hydrophobic agent (B) in the present invention has an octanol/water partition coefficient (Log Pow) at 25°C of 1 to 10 in terms of the balance between the sustained-release property of the hydrophobic agent (B) from the particles (P) and the elution property thereof. Examples of the hydrophobic agent (B) include agricultural and other chemical agents having an octanol/water partition coefficient (Log Pow) at 25°C of 1 to 10, and any known products may be used according to the desired medicinal properties. The hydrophobic agent (B) used in the present invention is preferably a compound having a molecular weight of less than 2,000. The hydrophobic agent (B) has an octanol/water partition coefficient (Log Pow) at 25°C of preferably 1 to 8, more preferably 1 to 7, still more preferably 1 to 6.

Preferred examples of the hydrophobic agent (B) include, as agricultural chemicals available in the market, thiazinyl (Log Pow = 3.68), acibenzolar-S-methyl (Log Pow = 3.1), isotianil (Log Pow = 2.96), benzylamine (Log Pow = 1.09), carpropamid (Log Pow = 4.2), benomyl (Log Pow = 1.3), pyroquilone (Log Pow = 1.42), thiophanate-methyl (Log Pow = 1.5), thiodicarb (Log Pow = 1.62), fosthiazate (Log Pow = 1.68), thiuram (Log Pow = 1.73), metalaxyl (Log Pow = 1.75), methidathion (Log Pow = 2.2), bensultap (Log Pow = 2.2), metominostrobin (Log Pow = 2.32), furametpyr (Log Pow = 2.36), flusulfamide (Log Pow = 2.8), captan (Log Pow = 2.8), ferimzone (Log Pow = 2.89), myclobutanil (Log Pow = 2.9), fluvalinate (Log Pow = 2.9), TPN (chlorothalonil) (Log Pow = 2.92), boscalid (Log Pow = 2.96), pefurazoate (Log Pow = 3.0), fthalide (Log Pow = 3.01), diethofencarb (Log Pow = 3.02), fluoroimide (Log Pow = 3.04), procymidone (Log Pow = 3.14), flutolanil (Log Pow = 3.17), dithianon (Log Pow = 3.2), cyazofamid (Log Pow = 3.2), fenbuconazole (Log Pow = 3.23), mepanipyrim (Log Pow = 3.28), diazinon (Log Pow = 3.3), iprobenfos (Log Pow = 3.37), isoprothiolane (Log Pow = 3.3), kresoxim-methyl (Log Pow = 3.4), bifenazate (Log Pow = 3.4), fenitrothion (Log Pow = 3.43), pyraclofos (Log Pow = 3.77), acrinathrin (Log Pow = 5.25), diflufenican (Log Pow = 4.9), fipronil (Log Pow = 4), fluazuron (Log Pow = 5.1), flufenoxuron (Log Pow = 4.01), hexaflumuron (Log Pow = 4.68), lufenuron (Log Pow = 5.12), teflubenzuron (Log Pow = 4.3), tefluthrin (Log Pow = 6.5), tetraconazole (Log Pow = 3.53), thiazopyr (Log Pow = 3.89), and transfluthrin (Log Pow = 5.46) (The Log Pow values each indicate the Log Pow value at 25°C).

Examples of the hydrophobic agricultural chemical agent that promotes the growth of a plant (a chemical agent having a Log Pow at 25°C of 1 to 10) include fat-soluble vitamins. An example of a chemical agent that is under development and has a Log Pow at 25°C of 1 to 10 is sphingolipid. One kind of the hydrophobic agent (B) may be used alone or two or more kinds thereof may be used in combination.

<Particles (P)>

The particles (P) in the present invention contain the biodegradable resin (A) and the hydrophobic agent (B).

In the particles (P), the biodegradable resin (A) and the hydrophobic agent (B) give a weight ratio [(A):(B)] of preferably 5:1 to 30:1, more preferably 5:1 to 20:1 in terms of the elution property of the hydrophobic agent (B).

The particles (P) may further contain a surfactant (C) having an HLB value of 3 to 6. Hereinafter, the surfactant (C) having an HLB value of 3 to 6 is also simply referred to as a surfactant (C). The surfactant (C) in the present invention is preferably a compound having a molecular weight of not less than 2,000, more preferably a compound having a molecular weight of 2,000 to 80,000. One kind of the surfactant (C) may be used or two or more kinds thereof may be used in combination. A compound having an octanol/water partition coefficient (Log Pow) at 25°C of 1 to 10 is not included in the surfactant (C) in the present invention.

The hydrophile-lipophile balance (HLB) value in the present invention means a degree showing the balance between inorganicity and organicity, and a higher HLB value means a higher inorganicity. The HLB value is calculated according to the following formula by the Oda method.

$$\mathtt{HLB\ =\ 10\ \times\ inorganicity/organicity}$$

The Oda method is disclosed, for example, on page 212 of "Introduction to Surfactants (Kaimen Kasseizai Nyuumon)" (2007, published by Sanyo Chemical Industries, Ltd.).

The organicity value and inorganicity value for HLB value calculation can be calculated using the values disclosed in the table on page 213 of the "Introduction to Surfactants."

When the particle contains the surfactant (C), the surfactant (C) and the hydrophobic agent (B) give a weight ratio [(C):(B)] of preferably 30:1 to 3:1, more preferably 20:1 to 5:1 in terms of inclusion rate.

When the surfactant (C) is used as a disperser of the hydrophobic agent (B) for mixing the biodegradable resin (A) and the hydrophobic agent (B), each of the particles (P) contains the surfactant (C) such that the surfactant (C) is encapsulated by the particle (P).

Also, the particles (P) can be easily formed by, for example, dissolving the biodegradable resin (A) and the hydrophobic agent (B) in a hydrophilic solvent and dropwise adding the resulting solution to an aqueous solution containing the surfactant (C). In this case, each of the particles (P) contains the surfactant (C) such that the surfactant (C) is adsorbed onto the surface of a particle containing the biodegradable resin (A) and the hydrophobic agent (B).

In an embodiment, when the biodegradable resin (A) used is at least one resin selected from the group consisting of polylactic acid, polycaprolactone, polyglycolide, and a lactic acid-glycolic acid copolymer, the particles (P) preferably contain the surfactant (C).

Examples of the surfactant (C) include a non-ionic surfactant, an anionic surfactant, a cationic surfactant, and an ampholytic surfactant each having an HLB value of 3 to 6. Preferred among these is a non-ionic surfactant and particularly preferred is an EO-PO copolymer in terms of the balance between the elution property of the hydrophobic agent (B) from the particles (P) and the sustained-release property thereof.

When the elution rate of the hydrophobic agent (B) should be increased, the weight proportion of EO in an EO-PO copolymer is preferably 50 to 90 wt%, more preferably 65 to 85 wt%. When the elution rate of the hydrophobic agent (B) should be reduced, the weight proportion is preferably 2 wt% or more and less than 50 wt%, more preferably 5 to 45 wt%.

The EO-PO copolymer has a number average molecular weight (hereinafter, abbreviated as Mn) of preferably 2,000 to 80,000, more preferably 8,000 to 80,000, still more preferably 9,000 to 75,000. Not less than 2,000 of Mn achieves good elution property of the hydrophobic agent (B), while not higher than 80,000 of Mn achieves good sustained-release property of the hydrophobic agent (B).

When the surfactant (C) is used as a disperser of the hydrophobic agent (B) for mixing the biodegradable resin (A) and the hydrophobic agent (B), the surfactant (C) is used in an amount of preferably 5 to 20 times the weight of the hydrophobic agent (B) in terms of the balance between the handling property and dispersibility. When the particles (P) are produced by dissolving the biodegradable resin (A) and the hydrophobic agent (B) in a hydrophilic solvent and dropwise adding the resulting solution to an aqueous solution containing the surfactant (C), the amount of the surfactant (C) is preferably 5 to 20 times the weight of the hydrophobic agent (B) in terms of the balance between the handling property and dispersibility.

An example of the method for producing the particles (P) is a method including dissolving the biodegradable resin (A) and the hydrophobic agent (B) in a hydrophilic solvent, dropwise adding the resulting solution to an aqueous solution containing the surfactant (C), evaporating solvents such as a hydrophilic solvent under reduced pressure, and lyophilizing the resulting product. For example, when the biodegradable resin (A) used includes one or more resins selected from the group consisting of polylactic acid, polycaprolactone, polyglycolide, and a lactic acid-glycolic acid copolymer, the particles (P) are preferably produced by the above method. An aqueous dispersion of the particles (P) before lyophilization may also be used as it is for the plant growth aid (X) of the present invention.

Examples of the hydrophilic solvent include ketone solvents such as acetone and methyl ethyl ketone, ester solvents such as ethyl acetate, ether solvents such as dioxane and tetrahydrofuran, and amide solvents such as N,N-dimethyl formamide, N,N-dimethyl acetamide, and N-methyl-2-pyrrolidone. One kind of hydrophilic solvent may be used or two or more kinds thereof may be used in combination.

The hydrophilic solvent as used in the present invention means a solvent that is dissoluble in an amount of 20 g or more in 100 g of water at 20°C.

The ratio of the total weight of the biodegradable resin (A) and the hydrophobic agent (B) to the solution obtained by dissolving the biodegradable resin (A) and the hydrophobic agent (B) in a hydrophilic solvent is preferably 0.5 to 5 wt% in terms of handling property.

The concentration of the surfactant (C) in the aqueous solution containing (C) is preferably 0.01 to 1 wt% in terms of handling property.

Dropwise addition of the hydrophilic-solvent solution containing the biodegradable resin (A) and the hydrophobic agent (B) to an aqueous solution containing the surfactant (C) is preferably performed while the hydrophilic-solvent solution is stirred with a tool such as a stirrer at 100 to 500 rpm.

When the biodegradable resin (A) used is a resin that contains a segment containing polylactic acid, polycaprolactone, polyglycolide, or a lactic acid-glycolic acid copolymer and a segment containing a resin having an SP value of 5 to 15 (preferably an EO homopolymer, an EO-PO copolymer, or a polymer of an ionic monomer), the particles (P) can be obtained without using the surfactant (C). This is because the segment containing polylactic acid, polycaprolactone, polyglycolide, or lactic acid-glycolic acid copolymer encapsulates the hydrophobic agent (B), and the segment containing a resin having an SP value of 5 to 15 is located on the surface side of each of the particles, which forms micelle particles. When the resin used is a resin that contains a segment containing polylactic acid, polycaprolactone, polyglycolide, or a lactic acid-glycolic acid copolymer and a segment containing a resin having an SP value of 5 to 15 (preferably an EO homopolymer, an EO-PO copolymer, or a polymer of an ionic monomer), the particles (P) can be produced by, for example, dissolving the resin in a hydrophilic solvent, dropwise adding the resulting solution to water under stirring, evaporating the solvent such as the hydrophilic solvent under reduced pressure, and lyophilizing the resulting product.

Comparing a method using the surfactant (C) with a method using a resin that contains a segment containing polylactic acid, polycaprolactone, polyglycolide, or a lactic acid-glycolic acid copolymer and a segment containing a resin having an SP value of 5 to 15, preferred is a method using the surfactant (C) in terms of easiness in production and cost.

The particles (P) have a median size of 1 to 300 nm, preferably 5 to 250 nm, more preferably 10 to 200 nm.

Particles having a median size of smaller than 1 nm have difficulty in industrial production, while particles having a median size of greater than 300 nm cause a plant to insufficiently take in the particles (P) and thereby cause poor elution property of the hydrophobic agent (B) from the particles (P).

The median size in the present invention can be measured with a dynamic light scattering analyzer (e.g., dynamic light scattering particle size distribution analyzer LB-550 (available from HORIBA), Zetasizer Ultra (available from Malvern Panalytical), or DelsaMax CORE (available from Beckman Coulter)).

<Plant growth aid (X)>

The plant growth aid (X) of the present invention contains the particles (P) containing the biodegradable resin (A) and the hydrophobic agent (B).

The plant growth aid (X) of the present invention may further contain water and additives such as a chemical agent having an octanol/water partition coefficient (Log Pow) of lower than 1, preferably 0 or lower (e.g., a fertilizer and an agricultural chemical such as ammonium sulfate) and a spreading agent (e.g., a non-ionic surfactant, an anionic surfactant, a cationic surfactant, and a silicone-containing spreading agent). The spreading agent may be a compound having a molecular weight of not less than 2,000 (preferably 2,000 to 80,000).

The method for growing a plant of the present invention utilizes the plant growth aid (X). In an embodiment, the plant growth aid (X) is preferably sprayed or applied to a plant, more preferably sprayed or applied to leaves, particularly preferably sprayed to leaves of a plant. The plant growth aid (X) of the present invention is suitably used for foliar spray or foliar application, and is more suitably used for foliar spray.

For being sprayed or applied to a plant, the plant growth aid (X) is preferably used in the form of an aqueous dispersion. For foliar spray/application, part or all leaves of a plant may undergo spraying or application.

Regarding the weight proportion of the plant growth aid (X) in the aqueous dispersion of (X), the weight proportion of the particles (P) is preferably 0.5 to 15 wt%, more preferably 1 to 10 wt% based on the weight of the aqueous dispersion in terms of spraying property and growth of a plant.

In the case of foliar spray or the like, the amount (preferably spraying amount) of the plant growth aid to be used relative to the area of leaves is, in terms of the amount (spraying amount) of the particles (P), preferably 1 to 200 $g/m^2$, more preferably 3 to 100 $g/m^2$.

Foliar spray/application may be performed on the upper side, lower side, or both sides of leaves.

The plant growth aid (X) of the present invention enables a plant to efficiently take in a chemical agent and has appropriate elution property of the chemical agent from particles, excellent sustained-release property of the chemical agent, and excellent sustainability of efficacy. Accordingly, the plant growth aid (X) is effective to the growth of a plant and growth promotion of a plant and is particularly useful for agricultural purposes. The reason of the effectiveness of the plant growth aid (X) to growth promotion is supposed that the plant growth aid (X) is taken into a plant through pores thereof to exhibit the effect. The method for growing a plant of the present invention can be used as a method for promoting the growth of a plant.

The plant growth aid of the present invention is preferably used for a plant having leaves. Examples of the plant include rice plants, poaceae plants (e.g., barley, wheat, rye, and oat), fruit vegetables, leafy vegetables, root vegetables, and flowering plants. Examples of the fruit vegetables include tomato, bell pepper, pea, cucumber, watermelon, edamame (green soybeans), cantaloupe, strawberry, bell pepper, okra, eggplant, green bean, squash, broad bean, and corn. Examples of the leafy vegetables include Japanese butterbur, green onion, Japanese ginger, garlic, butterhead lettuce, Chinese scallion, broccoli, cabbage, perilla, napa cabbage, bok choy, cicely, udo, spinach, cruciferous plants, cauliflower, lettuce, Brussels sprout, asparagus, mitsuba parsley, onion, parsley, Chinese chive, crown daisy, and celery. Examples of the root vegetables include Japanese radish, turnip, burdock root, carrot, potato, taro, sweet potato, yam, ginger, and lotus root. Preferred among these are brassicaceae vegetables such as rice, tomato, watermelon, cucumber, strawberry, and napa cabbage.

The plant growth aid (X) of the present invention is particularly preferably used during the nursery stage. When the plant growth aid (X) is used during the nursery stage, a seedling sheet material (Y) described later may be used according to need. A seedling sheet (Z) including the seedling sheet material (Y) and a seedling sheet base may also be used. The seedling sheet (Z) can be used by placing on the surface of or inside soil. The seedling sheet material (Y) can be used by placing on the surface of or inside soil or by mixing with soil. The method for growing a plant using the plant growth aid (X), the seedling sheet material (Y), and/or the seedling sheet (Z) including the seedling sheet material (Y) and a seedling sheet base during the nursery stage of a plant is a preferred embodiment of the present invention. The method for growing a plant of the present invention is suitably used for a method for growing a seedling of a plant. Preferred examples of the plant are those exemplified above.

Growing of a seedling includes seeding a seed, allowing the seed to bud, and greening, and may further include hardening after the greening. In the present invention, the plant growth aid (X) is preferably used for (preferably sprayed to) leaves of a seedling during the greening stage. When the plant is hardened, the plant growth aid may be used for leaves during the greening stage and/or hardening stage, and is preferably used for leaves during the greening stage. An example of a preferred embodiment of using the method for growing a plant of the present invention during the nursery stage is the following embodiment.

A seed is sown in soil provided with the sheet material (Y) and/or the seedling sheet (Z) and allowed to bud, followed by greening. The plant growth aid (X) is used for leaves of a seedling during the greening stage. The plant growth aid (X) may be used for (preferably sprayed to) the upper side, lower side, or both sides of the leaves. The seedling sheet material (Y) and/or the seedling sheet (Z) can be placed in a nursery box or the like. Preferably, soil (bed soil) is placed on the material (Y) and/or the sheet (Z), and then a seed is sown.

Examples of the seed are seeds of the plants exemplified above. Before sowing, the seed may be preliminary treated (e.g., selection of seeds, seed soaking, and forced germination). Conditions or the like for the bed soil, seed sowing, budding, greening, and hardening may be selected or adjusted according to the type of the plant. After hardening, the seedling is preferably transferred to a main rice paddy or a field.

The following describes a case of growing seedlings using rice seeds as seeds.

Seedlings planted with a rice transplanter are usually grown in a bed called a nursery bed. For example, the following seedling growing step is preferred.

1) Preliminary treatment on seeds

1-1) Rice seed selection: After sterilization, floating rice seeds are removed by seed selection with salt solution, and selected seeds are washed with water and dried.
1-2) Seed soaking: The rice seeds are soaked in water for five days to uniformly absorb water.
During soaking, water change and oxygen supplementation by water draining are repeated every day. 1-3) Forced germination: After oxygen supplementation, the seeds are soaked in warm water at 32°C for 10 hours and allowed to have a pigeon breast shape.

2) Bed soil preparation
Aggregated soil having air permeability and good drainage is selected and adjusted to have a pH of 5. A base fertilizer is mixed thereto.
3) Soil pouring
The bed soil is poured in a nursery bed and flattened by land rolling.
4) Sowing
The seeds are uniformly sown in the nursery bed and watered so that the rice seeds are settled. Unevenness in sowing is removed.
5) Soil covering
Soil is poured to a 5-mm thickness and is uniformly flattened.
6) Control of budding state of seedlings in a nursery cabinet
The seedlings are grown in a nursery cabinet at 32°C for two days to have a coleoptile length of about 1.2 cm.
7) Preliminary greening
After oxygen supplementation and irrigation, the seedlings are left to stand at 25°C for one day, then at 20°C for one day while weakly lighted in the nursery bed.
8) Greening
The seedlings are left in an environment at 30°C in the day time and at 12°C at the night time in a greenhouse under sufficient irrigation several times a day. This procedure is repeated for eight days to allow the seedlings to have 2.5 leaves.
9) Hardening

The seedlings are left in an environment at 20°C in the day time and at 10°C in the night time for ten days to be gradually grown to have 3.5 leaves, i.e., to a suitable state for growing under natural conditions.

The seedling sheet (Z) is preferably placed in the nursery bed before soil pouring 3). The seedling sheet (Z) may be placed in any place by any method, but is preferably placed in the bottom of a nursery bed.

The plant growth aid (X) is more preferably used during the period of greening 8), but may be used during the period of hardening 9).

<Seedling sheet material (Y)>

The seedling sheet material (Y) preferably contains a water absorbent polymer material (D), and may contain a fertilizer (E) according to need. The seedling sheet material preferably further contains a filler (F).

The water absorbent polymer material (D) may be any product such as a water absorbent resin, and is preferably a carboxyl-group-containing hydrophilic crosslinked polymer, more preferably a polyacrylic acid (salt). The water absorbent polymer material (D) is not limited to a form in which the whole amount (100 wt%) consists of a polymer. The polyacrylic acid (salt) means a polymer containing a repeating unit containing an acrylic acid (salt) as a main component.

Specifically, the polyacrylic acid (salt) is a polymer that contains, as a monomer other than a crosslinker, an acrylic acid (salt) in an amount of preferably 50 to 100 mol%, more preferably 70 to 100 mol%, still more preferably 90 to 100 mol%, particularly preferably substantially 100 mol%. The salt as a polymer is preferably any of an alkali metal salt, an alkaline-earth metal salt, and an ammonium salt. More preferred among these are a monovalent salt and an alkali metal salt, and particularly preferred are a potassium salt and a sodium salt. The polyacrylic acid (salt) may be in any form, preferably in the form of particles or powder.

The water absorbent polymer material (D) absorbs 25°C ion exchange water at a water absorption magnification of usually 80 to 1000 times, preferably 90 to 670 times, more preferably 120 to 530 times, and still more preferably 130 to 480 times. Less than 80 times of the water absorption magnification reduces the moisture retainability of a water retainer, which possibly increases the cost due to an increased amount of the polymer material or possibly requires frequent water supplement. A higher water absorption magnification is preferred because the amount of the polymer material can be saved. Still, higher than 1000 times of a water absorption magnification of the water absorbent polymer material reduces the permeability, which possibly deteriorates the vegetation.

The water absorption magnification is determined by the following method.

[Determination of ion exchange water absorption magnification]

A nylon mesh bag (250 mesh) is charged with a water absorbent polymer material sample L (g). This bag is immersed in an excessive amount of ion exchange water. After 60 minutes from the immersion, the bag is taken out to the air, and water is drained off by leaving the bag in the air for 15 minutes. Then, the weight M (g) is measured, and the water absorption magnification is calculated according to the following formula.

Here, the mesh bag alone is subjected to the same steps, and the measured weight N (g) is subtracted as blank.

$$\texttt{Ion exchange water absorption magnification = (M - N)/L}$$

The pH value of the water absorbent polymer material (D) as an absorber in which 100 parts by weight of 25°C ion exchange water is absorbed by 1 part by weight of the water absorbent polymer material is preferably 4.5 to 7.5, more preferably 5.0 to 7.0 in terms of vegetation.

The pH value is measured by the following method.

[Measurement of pH value]

The water absorbent polymer material in an amount of 1 part by weight is put in 100 parts by weight of 25°C ion exchange water. The mixture is left to stand at 25°C for eight hours in a constant-temperature bath, whereby the water absorbent polymer material is swollen to provide an absorber. The temperature of the absorber is confirmed to be 25°C with a thermometer, and then a pH meter is inserted in the absorber. When the pH value comes almost stable, the value is read. When the water absorbent polymer material has a small water absorption magnification, the absorber produced from the water absorbent polymer material and ion exchange water are separated into two phases. Thus, the pH meter is inserted after uniforming the two phases by stirring to measure the value. When phase separation occurs again even immediately after uniforming by stirring, the pH meter is inserted under stirring to measure the value.

Examples of the fertilizer (E) include common fertilizers such as a nitrogenous fertilizer, a phosphoric acid fertilizer, a potash fertilizer, an organic fertilizer, a complex fertilizer, a calcareous fertilizer, a silicate fertilizer, a magnesia fertilizer, a manganese fertilizer, a boron fertilizer, and a trace-element-complexed fertilizer and specific fertilizers other than these (e.g., slow release fertilizers). Components of these fertilizers are in a liquid form or a solid form such as powder and can be present in a seedling sheet material or a seedling sheet by being added to the water absorbent polymer material (D) or by being added to water to be poured onto (D). The amount of the fertilizer (E) may be appropriately set according to the type of the crop to be cultivated and the type of the fertilizer to be used, and is 1 to 500 g, preferably 3 to 300 g for each unit area ($m^2$) of the seedling sheet, for example. In the case of a seedling sheet material, the fertilizer (E) is preferably added to the seedling sheet material such that the amount of the fertilizer (E) is within the above range for each unit area ($m^2$).

Preferred examples of the filler (F) include fillers in the form of powder, particles, fibers, and flocculent. The filler (F) is preferably a filler having appropriate air permeability, a filler not affecting soil when placed on the ground, and/or a filler having a tendency to be degraded on the surface of or inside soil, so as not to impair the budding and growing of a seed. Examples include the following: inorganic porous materials such as perlite, vermiculite, and rock fibers, wood chips, rice husks, buckwheat chaff, rice bran, cotton, straw, grass peat, sheep wool, sawdust, pulp, and paper scraps. The filler (F) is added in an amount of preferably 1 to 500 g, more preferably 3 to 300 g per unit area ($m^2$)

of a seedling sheet in order to keep the air permeability and thickness. In the case of a seedling sheet material, the filler (F) is preferably contained in the seedling sheet material such that the amount of the filler (F) per unit area ($m^2$) is within the above range.

<Seedling sheet (Z)>

The seedling sheet (Z) is a seedling sheet containing the seedling sheet material (Y) and a seedling sheet base. An example of the seedling sheet base is a sheet (G).

Examples of the sheet (G) include a permeable sheet, a water decaying sheet, and a water soluble sheet, and two or more kinds thereof may be combined. The sheet (G), when formed into a seedling sheet, has a thickness of preferably 0.01 to 9 mm, more preferably 0.02 to 3 mm. The sheet (G) has a weight of, for example, 5 to 300 g, preferably 10 to 100 g per unit area ($m^2$) of the seedling sheet (Z) in terms of shape retention and keeping the thickness of the seedling sheet. Examples of the permeable sheet include cellulose fiber woven/knit fabric (cloth), non-woven fabric, paper, water soluble polyvinyl alcohol fiber woven/knit fabric, films, and paper board. Preferred among these are those having favorable permeability, such as a sheet having a water absorption rate of 5 minutes or shorter as measured by method A for determining water absorption rate disclosed in JIS L 1096. In order to avoid impairment of budding and growing of a seed, the sheet preferably has appropriate air permeability and a tendency to be degraded on the surface of or inside soil when placed on the ground. Preferred among these are cellulose paper and non-woven fabric.

Examples of the water decaying sheet include paper in which pulp fibers are bonded by a water-soluble or hydrophilic glue, a water swelling polymer, or the like and the pulp fibers are separated by contact with water (e.g., "Dissolvo MDP" available from Mishima Paper Co., Ltd.) and paper in which the Dissolvo MDP and a heat sealing agent are combined to impart moldability (thermal adherency) (e.g., "Dissolvo MDP-P" available from Mishima Paper Co., Ltd.). Such paper has a high decaying speed by water absorption. Examples of the water soluble sheet include water soluble films such as a water soluble poval film, a starch film, and a carrageenan film, and water soluble non-woven fabric made of poval fibers (e.g., "Ecomold" and "Ecosorb" available from Japan Vilene Company, Ltd.). These water soluble sheets have better sheet strength in a dry state than the above water decaying paper having the same thickness, although having inferior water dissolving (decaying) speed.

An example of a laminate sheet of the water decaying paper and a water soluble film is a sheet obtained by bonding and laminating at least one kind of the water decaying paper with at least one kind of the water soluble film (e.g., "Dissolvo A" in which the "Dissolvo MDP" is attached to a poval film, available from Mishima Paper Co., Ltd.). Such a laminate sheet has a high dissolving (decaying) speed and high film strength. This is because the high strength of the paper enables reduction in thickness of a water soluble film to be attached, which can improve both of the dissolving (decaying) speed and the film strength as a whole laminate sheet. Preferred among these water soluble or water decaying sheets are water decaying paper and water soluble non-woven fabric. These water soluble or water decaying sheets decay or dissolve in water within five minutes, preferably within two minutes, more preferably within one minute, for example.

The seedling sheet (Z) is preferably a sheet containing the water absorbent polymer material (D) and is preferably a seedling sheet containing the water absorbent polymer material (D) on the surface of or inside of at least one sheet (G). In the seedling sheet (Z), at least one sheet (G) may further contain the fertilizer (E), and may still further contain the filler (F). The seedling sheet (Z) may contain the water absorbent polymer material (D), at least one sheet (G), and a fertilizer (E) and/or a filler (F), and (D) and (E) and/or (F) may be present on the surface of or inside of the at least one sheet (G). When two or more sheets (G) are used for the seedling sheet (Z), the water absorbent polymer material (D) may be present on the surface or inside of at least one of the sheets (G). Examples of the seedling sheet including two or more sheets (G) include a sheet having a five-layer structure including a sheet (G) layer, a layer containing a filler (F) and a water absorbent polymer material (D), a (G) layer, a fertilizer (E) layer, and a (G) layer, and a sheet having a four-layer structure including two (G) layers, a layer containing (D) to (F) mixed, and a (G) layer.

The seedling sheet (Z) is produced by a known method such as a method including immersing a sheet (G) in a mixture containing the above (D) to (F) and a method of applying this mixture to a surface of the sheet (G). When two sheets (G) are used, examples of the production method include the following two methods in addition to a method of superimposing two sheets produced by the above method, for example. Method (a): A mixture containing (D) to (F) is uniformly sprayed to one sheet (G), the other (G) is superimposed thereon, and pressure molding such as embossing is performed. Method (b): A mixture containing (D) to (F) is added to an appropriate bonding material (H) described later, the resulting mixture is applied to one sheet (G), the other (G) is superimposed thereon, followed by molding, and the workpiece is dried.

Examples of the bonding material (H) for fixing (D) to (F) on the seedling sheet (Z) include a natural polymer, a synthesized resin, and a natural or synthesized rubber. Examples of the natural polymer include starch, carboxy methyl cellulose, methyl cellulose, ethyl cellulose, hydroxy methyl cellulose, hydroxy ethyl cellulose, sodium alginate, guar gum, xanthan gum, bean gum, carrageenan, and gluten. Examples of the synthesized resin include acrylic resins other than the water absorbent polymer material (D), polyurethane resins, unsaturated polyester resins, polyamide resins, and ethylene copolymer resins. Examples of the natural or synthesized rubber include natural rubber, acrylic rubber, butyl rubber, polyisobutylene rubber, styrene-butadiene rubber, ethylene-propylene rubber, and chloroprene rubber. One kind of these may be used alone or two or more kinds thereof may be used in combination. Preferred among these are water soluble natural polymers such as starch, carboxy methyl cellulose, and sodium alginate.

EXAMPLES

Hereinafter, the present invention is described in further detail with reference to examples and comparative examples which are not intended to limit the present invention. Here, Log Pow means an octanol/water partition coefficient at 25°C.
The median size of particles was measured with a dynamic light scattering analyzer (trade name: dynamic light scattering particle size distribution analyzer LB-550, available from HORIBA).

<Production Example 1>

In a container, 50 mg of polylactic acid [Mw = 60,000, available from Sigma-Aldrich Co. LLC] and 5 mg of thiazinyl [Log Pow = 3.68, available from FUJIFILM Wako Pure Chemical Corporation] were dissolved in 10 mL of acetone. An EO-PO copolymer [Newpol PE-128, number average molecular weight (Mn) 31,000, EO/PO = 6.1 (mole ratio) (weight proportion of EO in EO-PO copolymer: 82.2 wt%), HLB = 4.89, available from Sanyo Chemical Industries, Ltd.] in an amount of 50 mg was dissolved in 20 mL of ion exchange water. The polylactic acid solution adjusted to 25°C was added dropwise to the aqueous solution adjusted to 25°C under stirring at 200 rpm with magnetic stirrer HS-30D [available from As One Corporation] over five minutes. The resulting solution was further stirred at the same stirring rate at 25°C for 20 minutes. Thereafter, the solvent was evaporated under reduced pressure with an evaporator and then lyophilized, whereby particles (P-1) were obtained. The particles (P-1) had a median size of 190 nm.

<Production Example 2>

Particles (P-2) were obtained through the same operation as in Production Example 1, except that the polylactic acid used was polylactic acid [RESOMER R203S, Mw = 23,000, available from Sigma-Aldrich Co. LLC.]. The particles (P-2) had a median size of 155 nm.

<Production Example 3>

Particles (P-3) were obtained through the same operation as in Production Example 1, except that the EO-PO copolymer used was an EO-PO copolymer [Newpol PE-78, Mn = 9,350, EO/PO = 4.8 (mole ratio) (weight proportion of EO in EO-PO copolymer: 78.6 wt%), HLB = 5.01, available from Sanyo Chemical Industries, Ltd.]. The particles (P-3) had a median size of 180 nm.

<Production Example 4>

Particles (P-4) were obtained through the same operation as in Production Example 1, except that an EO-PO copolymer [Newpol PE-78, Mn = 9,350, available from Sanyo Chemical Industries, Ltd.] was used as a surfactant instead of the EO-PO copolymer used in Production Example 1, and polylactic acid [RESOMER R203S, Mw = 23,000, available from Sigma-Aldrich Co. LLC.] was used as the polylactic acid. The particles (P-4) had a median size of 120 nm.

<Production Example 5>

Particles (P-5) were obtained through the same operation as in Production Example 1, except that a carpropamid [Log Pow = 4.2, available from FUJIFILM Wako Pure Chemical Corporation] was used as a hydrophobic agent instead of thiazinyl. The particles (P-5) had a median size of 170 nm.

<Production Example 6>

Particles (P-6) were obtained through the same operation as in Production Example 1, except that a lactic acid-glycolic acid copolymer [RESOMER RG505, Mw = 61,500, available from Sigma-Aldrich Co. LLC.] was used instead of the polylactic acid. The particles (P-6) had a median size of 186 nm.

<Production Example 7>

In a flask, 1.4 g of polylactic acid [Mw = 60,000, available from Sigma-Aldrich Co. LLC.] and 0.7 g of an EO-PO copolymer [Newpol PE-128, Mn = 31,000, SP value 9.24, available from Sanyo Chemical Industries, Ltd.] were mixed, and the solution was heat melted at 180°C. Then, a tin di(2-ethylhexanoate) catalyst (1.4 mg) was added, and the system was purged with nitrogen and then heated at 180°C for 15 hours, whereby a polymer in which an EO-PO copolymer bound to polylactic acid was obtained. In a container, 50 mg of the polymer in which an EO-PO copolymer bound to the polylactic acid and 5 mg of thiazinyl [Log Pow = 3.68, available from FUJIFILM Wako Pure Chemical Corporation] were dissolved in 10 mL of acetone. This solution was added dropwise to 20 mL of 25°C ion exchange water under stirring at 200 rpm using magnetic stirrer HS-30D [available from As One Corporation] at 25°C over five minutes, and the solution was further stirred at the same stirring rate at 25°C for 20 minutes. Then, the solvent was evaporated under reduced pressure with an evaporator, whereby particles (P-7) were obtained. The particles (P-7) had a median size of 180 nm.

<Production Example 8>

Particles (P-8) were obtained through the same operation as in Production Example 1, except that an EO-PO copolymer (Mn = 31,000, EO/PO = 0.5 (mole ratio) (weight proportion of EO in EO-PO copolymer: 27.2 wt%), HLB = 4.89) produced by the following method was used as an EO-PO copolymer. The particles (P-8) had a median size of 170 nm.

(Production of EO-PO copolymer)

An autoclave equipped with a stirrer, a thermometer, a pressure gauge, a pressure resistant dripping cylinder, a pressure-reducing line and a nitrogen introduction line was charged with 0.2 parts by weight (1 mol) of ethylene glycol and 0.43 parts by weight of potassium hydroxide, and the solution was started to be stirred. The autoclave was filled with nitrogen, the temperature was increased to 130°C, and the solution was subjected to dehydration at a pressure of -0.1 MPaG for one hour. Then, the temperature was increased to 160°C, 72.3 parts by weight (388 mol) of 1,2-propylene oxide was successively added dropwise at a pressure of not higher than 0.3 MPaG over six hours, and the mixture was stirred at the same temperature for one hour until pressure equilibrium was achieved. Then, 27.4 parts by weight (194 mol) of ethylene oxide was successively added dropwise over three hours, and the solution was stirred at the same temperature for one hour until pressure equilibrium was achieved. The solution was then cooled down to 60°C and neutralized with 0.32 parts by weight of acetic acid, whereby an EO-PO copolymer was obtained.

<Comparative Production Example 1>

Particles (P'-1) were obtained through the same operation as in Production Example 1, except that non-biodegradable polystyrene [Mw = 50,000, available from FUJIFILM Wako Pure Chemical Corporation] was used instead of the polylactic acid. The particles (P'-1) had a median size of 165 nm.

<Examples 1 to 8 and Comparative Example 1>

Each of the particles (P-1) to (P-8) and (P'-1) in an amount of 20 mg was dispersed in 3 mL of saline to provide a dispersion. The dispersion was subjected to dialysis with a dialysis membrane having a molecular weight cut off (MWCO) of 14,000 against 150 mL of saline as a solution outside the membrane. The elution percentage of the chemical agent eluted into the solution outside the membrane [100 × weight of chemical agent eluted/initial weight of chemical agent in particles (%)] was measured with an HPLC device for each predetermined period of time. The results are shown in Table 1.

[Table 1]

| | | Elution percentage in each time period (%) | | | | | | | | |
|---|---|---|---|---|---|---|---|---|---|---|
| Time (hr) | | 0 | 0.5 | 1 | 3 | 6 | 9 | 24 | 36 | 48 |
| Example 1 | P-1 | 0 | 0 | 0 | 0 | 0 | 0 | 18 | 26 | 30 |
| Example 2 | P-2 | 0 | 1 | 3 | 22 | 60 | 89 | 100 | 100 | 100 |
| Example 3 | P-3 | 0 | 0 | 0 | 1 | 17 | 40 | 85 | 93 | 98 |

(continued)

| | | Elution percentage in each time period (%) | | | | | | | | |
|---|---|---|---|---|---|---|---|---|---|---|
| Time (hr) | | 0 | 0.5 | 1 | 3 | 6 | 9 | 24 | 36 | 48 |
| Example 4 | P-4 | 0 | 1 | 11 | 39 | 86 | 94 | 100 | 100 | 100 |
| Example 5 | P-5 | 0 | 0 | 0 | 0 | 0 | 6 | 39 | 48 | 63 |
| Example 6 | P-6 | 0 | 0 | 0 | 0 | 1 | 12 | 43 | 61 | 68 |
| Example 7 | P-7 | 0 | 0 | 0 | 0 | 0 | 8 | 40 | 55 | 64 |
| Example 8 | P-8 | 0 | 0 | 0 | 0 | 0 | 0 | 2 | 4 | 8 |
| Comparative Example 1 | P'-1 | 0 | 0 | 0 | 0 | 0 | 0 | 0 | 0 | 0 |

Hereinafter, the amount of the particles (P) taken by leaves of a plant was evaluated using a chemical agent in which a hydrophobic agent was labeled with a radioisotope $125_I$ .

<Production Example 9>

An Eppendorf tube was charged with 50 $\mu$L of benzylamine [Log Pow = 1.09, available from FUJIFILM Wako Pure Chemical Corporation] and 50 $\mu$L of a 0.1-M phosphoric acid buffer solution having a pH of 7.2 [available from FUJIFILM Wako Pure Chemical Corporation], followed by mixing. To the solution was added 5 $\mu$L of a Na$^{125}$I solution (3.7 GBq/mL, available from NEN Research Products). Chloramine-T [available from FUJIFILM Wako Pure Chemical Corporation] was dissolved in a 0.1-M phosphoric acid buffer solution (pH 7.2) and adjusted to a concentration of 0.5 mg/mL. The chloramine-T solution in an amount of 200 $\mu$L was added to the Eppendorf tube, and a radioisotope labeling reaction was performed at 25°C for two minutes. Then, 200 $\mu$L of a phosphoric acid buffer solution (pH 7.2) containing 4 mg/mL of sodium disulfite was added to terminate the reaction. Unreacted Na$^{125}$I without being labelled was removed with a PD10 column (available from GE Healthcare).

<Production Example 10>

Particles (P-9) were obtained through the same operation as in Production Example 1, except that the radioisotope-labelled benzylamine produced in Production Example 9 was used instead of thiazinyl. The particles (P-9) had a median size of 185 nm.

<Production Example 11>

Particles (P-10) were obtained through the same operation as in Production Example 4, except that the radioisotope-labelled benzylamine produced in Production Example 9 was used instead of thiazinyl. The particles (P-10) had a median size of 125 nm.

<Comparative Production Example 2>

Particles (P'-2) were obtained through the same operation as in Production Example 1, except that the radioisotope-labelled benzylamine produced in Production Example 9 was used instead of thiazinyl and polylactic acid [RESOMER RG756S, Mw = 96,000, available from Sigma-Aldrich Co. LLC] was used as the polylactic acid. The particles (P'-2) had a median size of 360 nm.

<Example 9>

The particles (P-9) in an amount of 20 mg were dispersed in 3 mL of saline to provide a dispersion. The dispersion containing the particles (P-9) (nanoparticle dispersion) in an amount of 100 $\mu$L was sprayed to the upper side of one leaf of a commercially available herb seedling in a pot (diameter 9 cm) such that the dispersion was not spread out of the leaf. The leaf sprayed with the dispersion was left to stand at 25°C for one hour, was cut off, was immersed in ion exchange water in a container for one minute, and was taken out of the container. The liquid in the container was changed with fresh ion exchange water. The leaf was further subjected to an operation of immersing in the fresh ion exchange water in the container and taking out of the container three times, whereby the labelling chemical agent attached to the leaf surface was removed. The leaf (target leaf sample) was set in a sample container of a gamma counter (ARC-301B, available from Aloka). The radiation quantity of the sample was measured and the uptake rate (%) thereof was calculated according to the following equation.

$$\text{Uptake rate (\%)} = [(\text{radiation quantity of target leaf sample})/(\text{radiation quantity of 100 } \mu L \text{ nanoparticle dispersion})] \times 100$$

Similarly, the dispersion was sprayed to a leaf of a different herb seedling pot through the same operation. The leaf was left to stand at 25°C for three hours, and the particles (P-9) uptake rate of the leaf was measured. The results are shown in Table 2.

<Example 10>

The same operation as in Example 9 was performed using the particles (P-10) instead of the particles (P-9), and the particles (P-10) uptake rate of the leaf was measured. The results are shown in Table 2.

<Comparative Example 2>

The same operation as in Example 9 was performed using the particles (P'-2) instead of the particles (P-9), and the particles (P'-2) uptake rate of the leaf was calculated. The results are shown in Table 2.

[Table 2]

| | | Uptake rate in each time period for leaving (%) | |
|---|---|---|---|
| Time for leaving (hr) | | 1 | 3 |
| Example 9 | P-9 | 80 | 84 |
| Example 10 | P-10 | 86 | 87 |
| Comparative Example 2 | P'-2 | 0 | 0 |

The inclusion rates of thiazinyl in the particles (P-1), (P-4), and (P-6) (nanoparticles (P)) were determined by the following method. In the following experiments, a dispersion of the nanoparticles (P) (particles (P-1), (P-4), or (P-6)) having a thiazinyl content adjusted to 100 ppm in ion exchange water was used.

<Method for evaluating inclusion rate>

An aqueous dispersion of the nanoparticles (P) in an amount of 1 mL in an Eppendorf tube was sedimented by centrifugation (4°C, 15,000 rpm, 30 min), and then the supernatant solution was removed. Acetonitrile was added to the nanoparticles (P) after centrifugal sedimentation to dissolve the polylactic acid. The inclusion rate was calculated with a spectrophotometer.

<Examples 11 to 34 and Comparative Examples 3 to 8>

A seedling sheet material (Y-1) was obtained by mixing 4.9 g of water absorbent resin SANFRESH GT-1 (available from Sanyo Chemical Industries, Ltd., water absorption magnification 400 times, pH 7.0) and 17.5 g of pulverized pulp (filler).
The obtained seedling sheet material (Y-1) was uniformly sprayed to one permeable sheet (580 mm × 280 mm), and another permeable sheet (580 mm × 280 mm) was superimposed thereon, followed by embossing. Thereby, a seedling sheet (Z-1) was produced.
Also, a seedling sheet (Z-2) was produced using the filler (pulverized pulp) as a seedling sheet material (Y-2). The seedling sheet (Z-2) was produced by the same method as for the seedling sheet (Z-1), except that water absorbent resin SANFRESH GT-1 was not used.
[1] Seedling growing conditions

1. Sample species: Hinohikari (rice), House Momotaro (tomato)
2. Nursery box: inner area 580 × 280 mm/box
3. Seedling sheet: area 580 × 280 mm/sheet
4. Sowing: 180 g/box (in terms of dry rice seeds)
5. Nursery soil: Inaho baido (available from INAHO-KAKO CORPORATION): peat moss = 3:1 (capacity ratio) (used for bed soil and soil covering)
6. Chemical treatment: seed sterilization was performed with Benlate T (200-fold dilution) for 48 hours
7. Budding treatment: stacking method, budding by heating (32°C × two days)
8. Greening treatment: seedling growing by polytunnel cultivation

Next, seedlings were grown to 2 to 3 leaves under the seedling growing conditions [1] (nursery bed period). Each seedling sheet was placed in the bottom of the nursery box before pouring the soil. The growing states until 2 to 3 leaves of the seedlings are shown in the rows of "cultivation in nursery bed" of Table 3 (rice) and Table 4 (tomato). The seedling sheets used are shown in Tables 3 and 4. For the evaluation of the seedling growing states, the root spread and the aerial part growing state were evaluated by the following method.

<Evaluation of root spread and aerial part growing state during nursery bed period>

The root spread and the aerial part growing state during the nursery bed period were evaluated by measuring the length of each part.

- Root spread

Excellent: root length of 8 cm or longer
Good: root length of 5 cm or longer and shorter than 8 cm
Allowable: root length of 3 cm or longer and shorter than 5 cm
Poor: root length of shorter than 3 cm

- Aerial part growing state

Excellent: aerial part length of 12 cm or longer
Good: aerial part length of 8 cm or longer and shorter than 12 cm
Allowable: aerial part length of 4 cm or longer and shorter than 8 cm
Poor: aerial part length of shorter than 4 cm

One leaf of each obtained young seedling having 2 to 3 leaves was sprayed with 100 μL of a nanoparticle (P) aqueous dispersion having a thiazinyl content of 100 ppm or a 100-ppm thiazinyl solution (1% by volume of DMSO, 12.5% by volume of acetone, 0.01 wt% of Mai-Rinoh (available from NIHON NOHYAKU Co., Ltd.) such that the dispersion or solution was not spread out of the leaf. The nanoparticle (P) aqueous dispersion or the 100-ppm thiazinyl solution was sprayed to the upper side of the leaf. This seedling was cultivated in a paddy field by the following method. The disease resistance, crop injury, and aerial part growing ratio were evaluated and then compared with reference samples (comparative examples). The results are shown in the rows of "cultivation in paddy field" of Table 3 (rice) and Table 4 (tomato).

<Evaluation of disease resistance >

A 1/5000-are pot was filled with 2.9 kg of paddy field soil (clay loam). Ten young seedlings having 2 to 3 leaves grown by the above method were planted in a depth of 2 cm and watered, and the seedlings were placed in water at a depth of 3 cm. The seedlings were left to stand at 25°C for a predetermined period shown in Table 3 or Table 4 (days (day) from moving to paddy field until evaluation). Each leaf sprayed with the nanoparticle (P) dispersion (or thiazinyl solution) was cut off, immersed in ion exchange water in a container for one minute, and taken out from the container. The liquid in the container was replaced by fresh ion exchange water. The leaf was further subjected to an operation of immersing in the fresh ion exchange water in the container for one minute and taking out of the container three times, whereby the nanoparticles (P) (or thiazinyl) attached to the leaf surface were removed. Then, proteins were extracted from the above leaf using 8-min Plant Tissue Total Protein Extraction Kit (available from Cosmo Bio Co., Ltd.), and the PR1 protein content, which is a marker of disease resistance, in the extracted proteins was determined as follows. The total protein content was quantified with Micro BCATM protein assay kit (available from THERMO Fisher Scientific). In order to allow each experiment to have the same total protein content of the leaf, leaf extract liquid having a large amount of total protein content was diluted with ion exchange water to be standardized. This diluted extraction liquid was used for the following electrophoresis.

The test was performed five times for each seedling. The PR1 protein content was evaluated by western blotting (including electrophoresis, transferring, and color development) specifically described later.

(1) Electrophoresis

Electrophoresis was performed using a liquid mixture obtained by adding 10 μL of a sample buffer solution to 10 μL of leaf extract liquid under following conditions.

Sample solution: leaf extract liquid obtained in each of the examples and comparative examples
Polyacrylamide gel: E-R15L e-PAGEL [available from Atto Corporation]
Electrophoresis tank: WSE-1100P PageRun-R [available from Atto Corporation]
Time for electrophoresis: 90 minutes
Sample buffer solution: liquid mixture containing 900 μL of 4X Laemmli sample buffer [available from Bio-Rad Laboratories, Inc.] and 100 μL of 2-mercapto ethanol

(2) Transferring

Transferring was performed using a transferring membrane under the following conditions after the electrophoresis under the above conditions.

Transferring membrane: Amersham Hybond P0.45 PVDF [available from GE Healthcare]
Transferring liquid: liquid obtained by diluting AE-1465 EzFastBlot [available from Atto Corporation] ten-fold with pure water
Voltage/current: 12 V/400 mA
Time for transferring: 30 minutes

(3) Chemiluminescence

After the transferring under the above conditions, the transferring membrane was blocked and then subjected to an antigen-antibody reaction using a primary antibody and a secondary antibody. In this test, the primary antibody used was Anti-PR1 Antibody (rice: available from MybioSource, tomato: available from Agrisera), and the secondary antibody used was horseradish peroxidase HRP-labeled secondary antibody. Color producing was performed with Image Quant LAS4000 under the following conditions.

Detector: Image Quant LAS4000 (product of FUJIFILM Corporation)
Blocking time: 45 minutes
Reaction time for primary antibody: 120 minutes
Reaction time for secondary antibody: 60 minutes

(4) Method for analyzing expression amount

After a PR1 protein band was detected in the transferring membrane after the operations (1) to (3), the density of the band was quantified with Image J (available from National Institutes of Health, USA). In Examples 11 to 14, the quantified density of the band in each of Examples 11 to 14 was divided by the density of the band in Comparative Example 3. The obtained value was regarded as the PR1 protein mass ratio of each of Examples 11 to 14. Similarly, the density of the band obtained in an example treated with the nanoparticles (P) for a predetermined period was divided by the density of the band obtained in a comparative example treated with a thiazinyl solution for the same period. The obtained value was regarded as the PR1 protein mass ratio. The evaluation results are shown in Table 3 (rice) and Table 4 (tomato). A larger amount of a PR1 protein mass ratio means better resistance.

Not lower than 1.0 and 100 or lower of a PR1 protein mass ratio shows favorable resistance, while lower than 1.0 of a PR1 protein mass ratio is less likely to show resistance to crop diseases. A 100 or higher PR1 protein mass ratio often reflects a negative physiological function other than the resistance, such as crop injury, which means the resistance is not accurately evaluated.

<Evaluation of crop injury after treatment with nanoparticles (P) or thiazinyl>

Young seedlings were treated with the nanoparticles (P) or thiazinyl in the same manner as in the method described in <Evaluation of disease resistance>. Then, the degree of crop injury on the leaf surface was evaluated after a predetermined period of time (days (day) shown in Tables 3 and 4, from moving to the paddy field until evaluation). Specifically, crop injury was visually evaluated with the naked eye according to the following criteria.

(Crop injury index)

0: Harmless (healthy), 1: minimally damaged, 2: slightly damaged, 3: moderately damaged, 4: significantly damaged, 5: complete leaf firing

<Aaerial part growing ratio after treatment with nanoparticles (P) or thiazinyl>

Young seedlings were treated with the nanoparticles (P) or thiazinyl in the same manner as in the method described in the <Evaluation of disease resistance>, and the aerial part growing state was evaluated after a predetermined period (shown in Tables 3 and 4, days (day) from moving to the paddy field until evaluation). Specifically, the aerial part growing state was evaluated by measuring the length of each part. The aerial part length in each example treated with the nanoparticles (P) for a predetermined period was divided by the aerial part length in the comparative example treated with a thiazinyl solution for the same period. The calculated value was regarded as the aerial part growing ratio.

[Table 3]

| | | | Example | | | | | | | | | | | | | Comparative Example | | |
|---|---|---|---|---|---|---|---|---|---|---|---|---|---|---|---|---|---|---|
| | | | 11 | 12 | 13 | 14 | 15 | 16 | 17 | 18 | 19 | 20 | 21 | 22 | 3 | 4 | 5 |
| Cultivation in nursery bed | | Seedling sheet (Z) | Z-1 | Z-2 | Z-1 | Z-1 | Z-1 | Z-2 | Z-1 | Z-1 | Z-1 | Z-2 | Z-1 | Z-1 | Z-1 | Z-1 | Z-1 |
| | | Seedling sheet material (Y) | Y-1 | Y-2 | Y-1 | Y-1 | Y-1 | Y-2 | Y-1 | Y-1 | Y-1 | Y-2 | Y-1 | Y-1 | Y-1 | Y-1 | Y-1 |
| | | Water absorbent resin (D) | 4.9 | – | 4.9 | 4.9 | 4.9 | – | 4.9 | 4.9 | 4.9 | – | 4.9 | 4.9 | 4.9 | 4.9 | 4.9 |
| | | Filler (F) | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| | | Permeable sheet (G) | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 |
| | | Nanoparticles (P) | P-1 | P-1 | P-4 | P-6 | P-1 | P-1 | P-4 | P-6 | P-1 | P-1 | P-4 | P-6 | – | – | – |
| | | Inclusion rate (%) | 75 | 75 | 68 | 72 | 75 | 75 | 68 | 72 | 75 | 75 | 68 | 72 | – | – | – |
| | Thiazinyl (ppm) | | – | – | – | – | – | – | – | – | – | – | – | – | 100 | 100 | 100 |
| | Evaluation result | Root spread | Excellent | Good | Excellent | Good | Excellent | Good | Excellent | Excellent | Excellent | Good | Good | Excellent | Good | Excellent | Good |
| | | Aerial part growing state | Excellent | Good | Good | Excellent | Excellent | Good | Excellent | Good | Good | Good | Excellent | Excellent | Excellent | Good | Good |
| Cultivation in paddy field | | Soil amount (kg) | 2.9 | 2.9 | 2.9 | 2.9 | 2.9 | 2.9 | 2.9 | 2.9 | 2.9 | 2.9 | 2.9 | 2.9 | 2.9 | 2.9 | 2.9 |
| | | Irrigation frequency (times/day) | 1 | 1 | 1 | 1 | 1 | 1 | 1 | 1 | 1 | 1 | 1 | 1 | 1 | 1 | 1 |
| | | Days from moving to rice paddy field until evaluation (day) | 1 | 1 | 1 | 1 | 3 | 3 | 3 | 3 | 7 | 7 | 7 | 7 | 1 | 3 | 7 |
| | | Mass of nursery box after irrigation (kg) | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| | | Cultivation temperature (°C) | 25 | 25 | 25 | 25 | 25 | 25 | 25 | 25 | 25 | 25 | 25 | 25 | 25 | 25 | 25 |
| | Evaluation result | Crop injury | 0 | 0 | 0 | 1 | 0 | 0 | 0 | 0 | 0 | 0 | 1 | 0 | 3 | 4 | 4 |
| | | Aerial part growth ratio | 1.1 | 1.1 | 1.2 | 1.2 | 1.2 | 1.2 | 1.3 | 1.3 | 1.3 | 1.2 | 1.3 | 1.4 | 1.0 | 1.0 | 1.0 |
| | | PR1 protein mass ratio | 3.3 | 2.1 | 11.1 | 6.2 | 1.1 | 1.1 | 4.0 | 2.2 | 11.3 | 8.2 | 41.7 | 33.6 | 1.0 | 1.0 | 1.0 |

[Table 4]

| | | | Example | | | | | | | | | | | | | Comparative Example | | |
|---|---|---|---|---|---|---|---|---|---|---|---|---|---|---|---|---|---|---|
| | | | 23 | 24 | 25 | 26 | 27 | 28 | 29 | 30 | 31 | 32 | 33 | 34 | 6 | 7 | 8 |
| Cultivation in nursery bed | | Seedling sheet (Z) | Z-1 | Z-2 | Z-1 | Z-1 | Z-1 | Z-2 | Z-1 | Z-1 | Z-1 | Z-2 | Z-1 | Z-1 | Z-1 | Z-1 | Z-1 |
| | | Seedling sheet material (Y) | Y-1 | Y-2 | Y-1 | Y-1 | Y-1 | Y-2 | Y-1 | Y-1 | Y-1 | Y-2 | Y-1 | Y-1 | Y-1 | Y-1 | Y-1 |
| | | Water absorbent resin (D) | 4.9 | – | 4.9 | 4.9 | 4.9 | – | 4.9 | 4.9 | 4.9 | – | 4.9 | 4.9 | 4.9 | 4.9 | 4.9 |
| | | Filler (F) | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| | | Permeable sheet (G) | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 | 4.9×2 |
| | | Nanoparticles (P) | P-1 | P-1 | P-4 | P-6 | P-1 | P-1 | P-4 | P-6 | P-1 | P-1 | P-4 | P-6 | – | – | – |
| | | Inclusion rate (%) | 75 | 75 | 68 | 72 | 75 | 75 | 68 | 72 | 75 | 75 | 68 | 72 | – | – | – |
| | Thiazinyl (ppm) | | – | – | – | – | – | – | – | – | – | – | – | – | 100 | 100 | 100 |
| | Evaluation result | Root spread | Excellent | Good | Good | Good | Good | Good | Good | Excellent | Excellent | Good | Good | Excellent | Good | Excellent | Good |
| | | Aerial part growing state | Good | Good | Good | Excellent | Excellent | Good | Excellent | Good | Good | Good | Excellent | Good | Good | Good | Good |
| Cultivation in paddy field | | Soil amount (kg) | 2.9 | 2.9 | 2.9 | 2.9 | 2.9 | 2.9 | 2.9 | 2.9 | 2.9 | 2.9 | 2.9 | 2.9 | 2.9 | 2.9 | 2.9 |
| | | Irrigation frequency (times/day) | 1 | 1 | 1 | 1 | 1 | 1 | 1 | 1 | 1 | 1 | 1 | 1 | 1 | 1 | 1 |
| | | Days from moving to rice paddy field until evaluation (day) | 1 | 1 | 1 | 1 | 3 | 3 | 3 | 3 | 7 | 7 | 7 | 7 | 1 | 3 | 7 |
| | | Mass of nursery box after irrigation (kg) | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| | | Cultivation temperature (°C) | 25 | 25 | 25 | 25 | 25 | 25 | 25 | 25 | 25 | 25 | 25 | 25 | 25 | 25 | 25 |
| | Evaluation result | Crop injury | 0 | 0 | 0 | 1 | 0 | 0 | 0 | 0 | 0 | 0 | 1 | 0 | 2 | 3 | 3 |
| | | Aerial part growth ratio | 1.1 | 1.1 | 1.1 | 1.2 | 1.2 | 1.1 | 1.2 | 1.2 | 1.3 | 1.2 | 1.3 | 1.3 | 1.0 | 1.0 | 1.0 |
| | | PR1 protein mass ratio | 4.1 | 3.8 | 8.2 | 7.4 | 2.4 | 1.9 | 5.2 | 3.4 | 12.3 | 9.5 | 32.5 | 37.3 | 1.0 | 1.0 | 1.0 |

The values for the water absorbent resin (D), filler (F), and permeable sheet (G) in Tables 3 and 4 are expressed by weight (g).

INDUSTRIAL APPLICABILITY

The plant growth aid (X) of the present invention enables a plant to efficiently take in a chemical agent and has excellent elution property of the chemical agent from particles, excellent sustained-release property of the chemical agent, and excellent sustainability of efficacy. Accordingly, the plant growth aid (X) has an excellent effect for the growth of a plant and growth promotion of a plant and is particularly useful for horticultural and agricultural purposes.

**Claims**

1. A plant growth aid (X) containing particles (P) having a median size of 1 to 300 nm,
the particles (P) containing a biodegradable resin (A) and a hydrophobic agent (B) having an octanol/water partition coefficient (Log Pow) at 25°C of 1 to 10.

2. The plant growth aid according to claim 1,
wherein the particles (P) further contain a surfactant (C) having an HLB value of 3 to 6.

3. The plant growth aid according to claim 1 or 2,
wherein the biodegradable resin (A) is at least one resin selected from the group consisting of polylactic acid, polycaprolactone, polyglycolide, a lactic acid-glycolic acid copolymer, and a resin that contains a segment containing one of these resins and a segment containing a resin having an SP value of 5 to 15.

4. The plant growth aid according to any one of claims 1 to 3, which is used for foliar spray.

5. A method for growing a plant using the plant growth aid (X) according to any one of claims 1 to 4.

# INTERNATIONAL SEARCH REPORT

| International application No. |
|---|
| PCT/JP2019/027136 |

**A. CLASSIFICATION OF SUBJECT MATTER**
Int.Cl.　　A01N25/10(2006.01)i,　A01P3/00(2006.01)i,　A01N43/828(2006.01)n,
　　　　　　A01N53/12(2006.01)n

According to International Patent Classification (IPC) or to both national classification and IPC

**B. FIELDS SEARCHED**

Minimum documentation searched (classification system followed by classification symbols)
Int.Cl.　A01N

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | CN 107306942 A (INST OF ENVIRONMENT AND SUSTAINABLE DEVELOPMENT IN AGRICULTURE CHINESE ACADEMY OF AGRICULTURAL SCIEN) 03 November 2017, paragraphs [0102], [0107], [0149]-[0266], [0331]-[0333], fig. 1 (Family: none) | 1-5 |
| X | CN 103766351 A (NATIONAL CENTER FOR NANOSCIENCE | 1-3, 5 |
| Y | AND TECHNOLOGY(NCNST) OF CHINA) 07 May 2014, paragraphs [0044]-[0059], fig. 2 (Family: none) | 1, 3-5 |
| X | FAN, Tengfei, et al., Journal of Applied Polymer Science, 2013, 129(4), pp. 1861-1867, DOI: 10.1002/app.38892 | 1-3, 5 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 September 2019 (26.09.2019) | 08 October 2019 (08.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT

| | International application No. |
|---|---|
| | PCT/JP2019/027136 |

**C (Continuation). DOCUMENTS CONSIDERED TO BE RELEVANT**

| Category* | Citation of document, with indication, where appropriate, of the relevant passages | Relevant to claim No. |
|---|---|---|
| X | ZHANG, Jiakun, et al., "Journal of Nanoscience and | 1-5 |
| Y | Nanotechnology", 2016, vol. 16, no. 6, pp. 6231-6237, DOI:10.1166/jnn.2016.10894 | 1, 3-5 |
| Y | VALLETTA, Alessio, et al., "Journal of Nanoparticle Research", 22 November 2014, 16, 2744, DOI:10.1007/s11051-014-2744-0 | 1, 3-5 |

Form PCT/ISA/210 (continuation of second sheet) (January 2015)

**EP 3 821 708 A1**

## REFERENCES CITED IN THE DESCRIPTION

**Patent documents cited in the description**

- JP 2001501959 T

**Non-patent literature cited in the description**

- **ROBERT F FEDORS.** *Polymer Engineering and Science,* February 1974, vol. 14 (2), 147-154